# EUROPEAN PATENT APPLICATION

(11) **EP 4 715 564 A1**
(43) Date of publication of application: **25.03.2026**
(21) Application number: 24857659.7
(22) Date of filing: 27.02.2024
(51) Int. Cl.: G06F 3/14

(54) **ALWAYS ON DISPLAY METHOD, AND ELECTRONIC DEVICE**

(30) Priority: 29.08.2023 CN 202311101915
(71) Applicant: Honor Device Co., Ltd., Shenzhen, Guangdong 518040 (CN)
(72) Inventor: WANG, Xiaofei, Shenzhen, Guangdong 518040 (CN); FENG, Yinpeng, Shenzhen, Guangdong 518040 (CN); XIAO, Yao, Shenzhen, Guangdong 518040 (CN)
(74) Representative: Epping - Hermann - Fischer
(86) International application number: PCT/CN2024/078781
(87) International publication number: WO 2025/044104

(57) **Abstract**

This application discloses an always on display method and an electronic device. The electronic device includes a display. The display includes a main screen and a back screen, and the main screen and the back screen are two display areas of the same display. When the electronic device is folded, the main screen and the back screen are oriented in opposite directions. When the electronic device is unfolded, the main screen and the back screen are oriented in a same direction, and the display area is an entire display screen. The method includes: displaying an AOD interface on the main screen in response to a screen-off operation at a first time point; where before the first time point, the electronic device is in a folded state, the main screen faces upward, and the main screen is on and displays a first interface; and displaying the AOD interface on the back screen in response to flipping the electronic device at a second time point, and turning off the AOD interface on the main screen; where after the electronic device is flipped, the main screen faces downward; and the second time point is later than the first time point. By using this application, intelligence of always on display on an outward foldable-screen mobile phone can be implemented.

## Description

This application claims priority to Chinese Patent Application No. 202311101915.7, filed with the China National Intellectual Property Administration on August 29, 2023 and entitled "ALWAYS ON DISPLAY METHOD AND ELECTRONIC DEVICE", which is incorporated herein by reference in its entirety.

### TECHNICAL FIELD

Embodiments of this application relate to the field of computer technologies, and in particular, to an always on display method and an electronic device.

### BACKGROUND

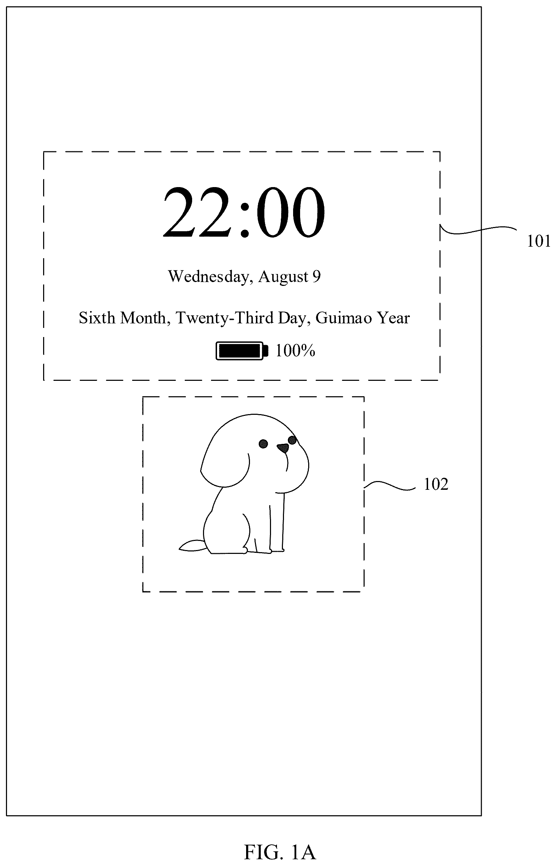

An always on display (always on display, AOD) function is a function of displaying information such as a time, a date, and an icon in a partial area of a screen without lighting up an entire screen of an electronic device (that is, in a case that the electronic device keeps low power consumption). For example, the electronic device is a mobile phone. As shown in FIG. 1A, after the always on display function is enabled on the mobile phone, when the mobile phone is screen-off, content such as a time, a date, and a battery level may be displayed in an area 101 of the screen, or content such as an icon may be displayed in an area 102. In this way, in a screen-off state of the mobile phone, the user may also obtain information such as a time and a date, which helps reduce screen-on power consumption when the user views information such as a time and a date.

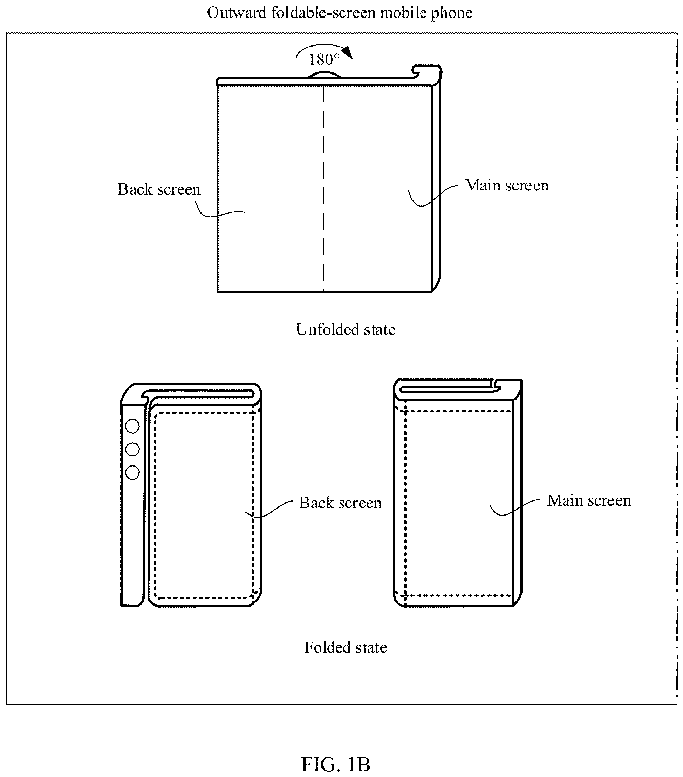

However, for an outward foldable-screen mobile phone, as shown in FIG. 1B, the outward foldable-screen mobile phone may include an unfolded state and a folded state. When the outward foldable-screen mobile phone is in the folded state, the mobile phone presents one display area on each of a main screen and a back screen. When the outward foldable-screen mobile phone is in the folded state, currently, always on display is performed on the main screen only, and always on display cannot be intelligently performed.

### SUMMARY

This application provides an always on display method and an electronic device, so that intelligence of always on display on an outward foldable-screen mobile phone can be implemented.

According to a first aspect, this application provides an always on display method, applied to an electronic device. The electronic device includes a display. The display includes a main screen and a back screen, and the main screen and the back screen are two display areas of the same display. When the electronic device is folded, the main screen and the back screen are oriented in opposite directions. When the electronic device is unfolded, the main screen and the back screen are oriented in a same direction, and the display area is an entire display screen. The method includes: displaying an AOD interface on the main screen in response to a screen-off operation at a first time point; where before the first time point, the electronic device is in the folded state, the main screen faces upward, and the main screen is on and displays a first interface; and displaying the AOD interface on the back screen in response to flipping the electronic device at a second time point, and turning off the AOD interface on the main screen; where after the electronic device is flipped, the main screen faces downward; and the second time point is later than the first time point.

Based on the method described according to the first aspect, when the electronic device is in the folded state, it is determined that the main screen faces upward and the AOD interface is displayed on the main screen in response to the screen-off operation of the user at the first time point; and it is determined that the main screen faces downward (that is, the back screen faces upward) and the AOD interface is displayed on the back screen after the electronic device is flipped by the user at the second time point. Therefore, intelligence of always on display on the outward foldable-screen mobile phone is implemented, and convenience of the user for viewing information such as a time and a date is improved.

In a possible implementation, the displaying an AOD interface on the main screen in response to a screen-off operation at a first time point includes: obtaining a screen posture of the electronic device in response to the screen-off operation at the first time point; and displaying the AOD interface on the main screen based on that the screen posture is the folded state and the main screen faces upward. Based on this manner, accuracy of displaying the AOD interface can be improved.

In a possible implementation, the obtaining a screen posture of the electronic device includes: obtaining first information, where the first information includes an angle between the main screen and the back screen, and/or whether the electronic device is in the folded state; and determining the screen posture of the electronic device based on the first information. Based on this manner, accuracy of detecting the screen posture of the electronic device can be improved. In a possible implementation, the method further includes: displaying the AOD interface on the display based on that the screen posture is the unfolded state. Based on this manner, always on display can be performed by using the entire screen, and more finer interfaces are presented to the user, so that intelligence of always on display on the outward foldable-screen mobile phone is also implemented.

In a possible implementation, the displaying the AOD interface on the main screen includes: setting a display mode to be main-screen display; and displaying the AOD interface on the main screen based on the set display mode. Based on this manner, accuracy of performing AOD display when the screen of the electronic device is switched can be improved, and power waste caused by an invalid screen switching operation can be avoided.

In a possible implementation, after the displaying the AOD interface on the back screen in response to flipping the electronic device at a second time point, and turning off the AOD interface on the main screen, the method further includes: displaying an incoming call interface on the main screen in response to an incoming call event, and not displaying or turning off the AOD interface on the back screen. Based on this manner, the large display area of the main screen may be used to present more finer interfaces to the user.

In a possible implementation, after the displaying the AOD interface on the back screen in response to flipping the electronic device at a second time point, and turning off the AOD interface on the main screen, the method further includes: displaying a notification interface on the main screen in response to a notification event, and not displaying or turning off the AOD interface on the back screen. Based on this manner, the large display area of the main screen may be used to present more finer interfaces to the user.

In a possible implementation, after the displaying the AOD interface on the back screen in response to flipping the electronic device at a second time point, and turning off the AOD interface on the main screen, the method further includes: displaying an alarm clock interface on the main screen in response to an alarm clock event, and not displaying or turning off the AOD interface on the back screen. Based on this manner, the large display area of the main screen may be used to present more finer interfaces to the user.

In a possible implementation, after the displaying the AOD interface on the back screen in response to flipping the electronic device at a second time point, and turning off the AOD interface on the main screen, the method further includes: not displaying or turning off the AOD interface on the back screen in response to arriving a time point for exiting the displayed AOD interface. Based on this manner, power consumption of the electronic device is reduced.

In a possible implementation, the method further includes: displaying the AOD interface on the back screen in response to the screen-off operation at a third time point; where before the third time point, the electronic device is in the folded state, the main screen faces downward, and the back screen is on and displays a second interface; and displaying the AOD interface on the main screen in response to flipping the electronic device at a fourth time point, and turning off the AOD interface on the back screen; where after the electronic device is flipped, the main screen faces upward; and the fourth time point is later than the third time point. Based on this manner, intelligence of always on display on the outward foldable-screen mobile phone is implemented. In a possible implementation, the displaying the AOD interface on the back screen includes: setting the display mode to be back-screen display; and displaying the AOD interface on the back screen based on the set display mode. Based on this manner, accuracy of performing AOD display when the screen of the electronic device is switched can be improved, and power waste caused by an invalid screen switching operation can be avoided.

In a possible implementation, the method further includes: obtaining a vertical acceleration when the electronic device is in a standstill state; and determining that the main screen faces upward if a direction of the vertical acceleration is downward; or determining that the main screen faces downward if a direction of the vertical acceleration is upward. Based on this manner, accuracy of determining a screen orientation of the electronic device can be improved.

According to a second aspect, this application provides an always on display apparatus. The apparatus may be an electronic device, an apparatus in an electronic device, or an apparatus capable of being cooperatively used with an electronic device. The always on display apparatus may alternatively be a chip system, and the always on display apparatus may perform the method performed by the electronic device according to the first aspect. Functions of the always on display apparatus may be implemented by using hardware, or may be implemented by executing corresponding software by hardware. The hardware or the software includes one or more units corresponding to the foregoing functions. The unit may be software and/or hardware. For an operation performed by the always on display apparatus and a beneficial effect, refer to the method and the beneficial effect described according to the first aspect. Details are not described again.

According to a third aspect, this application provides an electronic device. The electronic device includes one or more processors and one or more memories. The one or more memories are coupled to the one or more processors, the one or more memories are configured to store computer program code, and the computer program code includes computer instructions. When the one or more processors execute the computer instructions, the electronic device is enabled to perform the always on display method in any possible implementation of the first aspect. According to a fourth aspect, this application provides an always on display apparatus. The always on display apparatus includes a function or a unit configured to perform the method in any one of the first aspect.

According to a fifth aspect, this application provides a computer-readable storage medium. The computer-readable storage medium stores a computer program. The computer program includes program instructions. When the program instructions are run on an always on display apparatus, the always on display apparatus is enabled to perform the always on display method in any possible implementation of the first aspect.

According to a sixth aspect, this application provides a computer program product. When the computer program product is run on a computer, the computer is enabled to perform the always on display method in any possible implementation of the first aspect.

### BRIEF DESCRIPTION OF DRAWINGS

FIG. 1A is a schematic diagram of an always on display interface according to an embodiment of this application;
FIG. 1B is a schematic diagram of an outward foldable-screen mobile phone in an unfolded state and a folded state according to an embodiment of this application;
FIG. 2 is a schematic diagram of a hardware structure of an electronic device according to an embodiment of this application;
FIG. 3 is a block diagram of a software structure of an electronic device according to an embodiment of this application;
FIG. 4 is a schematic diagram of coordinates formulated in a dual-screen (a main screen and a back screen) display solution according to an embodiment of this application;
FIG. 5A, FIG. 5B, and FIG. 5C are a schematic flowchart of an always on display method according to an embodiment of this application;
FIG. 6 is a schematic flowchart of another always on display method according to an embodiment of this application;
FIG. 7 is a schematic diagram of an angle between a main screen and a back screen and a screen posture according to an embodiment of this application;
FIG. 8A is a schematic diagram of an always on display interface of a main screen according to an embodiment of this application;
FIG. 8B is a schematic diagram of an always on display interface of a back screen according to an embodiment of this application;
FIG. 9 is a schematic flowchart of another always on display method according to an embodiment of this application;
FIG. 10 is a schematic flowchart of another always on display method according to an embodiment of this application;
FIG. 11 is a schematic flowchart of another always on display method according to an embodiment of this application; and
FIG. 12 is a schematic flowchart of another always on display method according to an embodiment of this application.

### DESCRIPTION OF EMBODIMENTS

The following clearly and completely describes the technical solutions in embodiments of this application with reference to the accompanying drawings. In descriptions of the embodiments of this application, unless otherwise stated, "/" indicates a meaning of "or", for example, A/B may indicate A or B. "And/or" in the specification is merely used to describe an association relationship between associated objects, and indicates that three relationships may exist. For example, "A and/or B" may indicate that there are three cases: Only A exists, both A and B exist, and only B exists. In addition, in the descriptions of the embodiments of this application, "a plurality of" means two or more.

The following terms "first" and "second" are merely intended for descriptive purposes, and shall not be understood as an implication or implication of relative importance or an implicit indication of a quantity of indicated technical features. Therefore, features defined with "first" and "second" may explicitly or implicitly include one or more features. In the descriptions of the embodiments of this application, unless otherwise stated, "a plurality of" means two or more. The term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as java or an extensible markup language (extensible markup language, XML). Interface source code is parsed and rendered on an electronic device, and is finally presented as content that can be identified by the user. The user interface is usually in a representation form of a graphical user interface (graphic user interface, GUI), and the graphical user interface is a user interface that is related to a computer operation and that is displayed in a graphical manner. The user interface may be a visual interface element such as a time, a date, a text, an icon, a button, a menu, a tab, a text box, a dialog box, a status bar, a navigation bar, or a Widget displayed on a display of the electronic device.

To facilitate understanding of the solutions provided in the embodiments of this application, related concepts in the embodiments of this application are described below.

### 1. Always on display (always on display, AOD)

An always on display (always on display, AOD) function is a function of displaying information such as a time, a date, and an icon in a partial area of a screen without lighting up an entire screen of an electronic device (that is, in a case that the electronic device keeps low power consumption), which helps reduce screen-on power consumption caused when the user views information such as a time and a date. For example, the electronic device is a mobile phone. It is assumed that the always on display function is enabled on the mobile phone. When a user has performed a screen-off operation, the electronic device needs to display an AOD interface. There may be three modes for displaying the AOD interface, that is, normally on display (which may be understood as always displaying the AOD interface), timing display (which may be understood as always displaying the AOD interface in a preset time period, for example, always displaying the AOD interface in 1 hour), and touch display (which may be understood as briefly displaying the AOD interface when the user touches the screen, for example, displaying the AOD interface for 5 seconds when the user touches the screen). The screen-off operation may be a screen-lock operation, or may be a screen-touch operation, which is not limited herein. When the screen-off operation performed by the user is a screen-lock operation, the mode of displaying the AOD interface may be either normally on display, timing display, or touch display, that is, all the three modes are met. When the screen-off operation performed by the user is a screen-touch operation, the mode of displaying the AOD interface can only be touch display.

As shown in FIG. 1A, the AOD interface may display content such as a time, a date, and a battery level in an area 101 of the screen, or may display content such as an icon in an area 102. In this way, in a screen-off state of the mobile phone, the user may also obtain information such as a time and a date, which helps reduce screen-on power consumption when the user views information such as a time and a date.

### 2. Outward foldable screen

The outward foldable screen refers to a display that can be folded outward. For example, the electronic device is a mobile phone. As shown in FIG. 1B, an outward foldable-screen mobile phone may include an unfolded state and a folded state. When the outward foldable-screen mobile phone is in the folded state, a main screen and a back screen are oriented in opposite directions. It should be noted that, on the outward foldable screen, the main screen and the back screen are different display areas of a same screen. When the outward foldable-screen mobile phone is in the unfolded state, the entire screen faces the user, that is, the main screen and the back screen are oriented in a same direction. A display area that the user can see is the entire screen, and a better visual effect can be obtained. A so-called screen orientation refers to a direction opposite to a front face of the display.

However, for an AOD function of the outward foldable-screen mobile phone, if always on display is performed in only one area, the user may need to flip the mobile phone to view information such as a time and a date, which causes specific inconvenience. For example, when the outward foldable-screen mobile phone is in the folded state, always on display is performed only on the main screen. If the main screen of the mobile phone faces downward, the user needs to flip the mobile phone to view information such as a time, which reduces convenience of the user in viewing information such as a time and a date. If always on display is performed on both areas, when the outward foldable-screen mobile phone is placed in the folded state, there is always a case in which always on display is invalid in one area.

To implement intelligence of always on display on the outward foldable-screen mobile phone, and improve convenience of the user in viewing information such as a time and a date, this application provides an always on display method and an electronic device. In a specific implementation, the foregoing mentioned always on display method may be performed by an electronic device 100. The electronic device 100 may be an electronic device with an outward foldable screen, such as an outward foldable-screen mobile phone, an outward foldable-screen tablet computer, or an outward foldable-screen notebook computer, but is not limited thereto. The so-called outward foldable screen herein refers to a display that can be folded outward, and the display includes a main screen and a back screen.

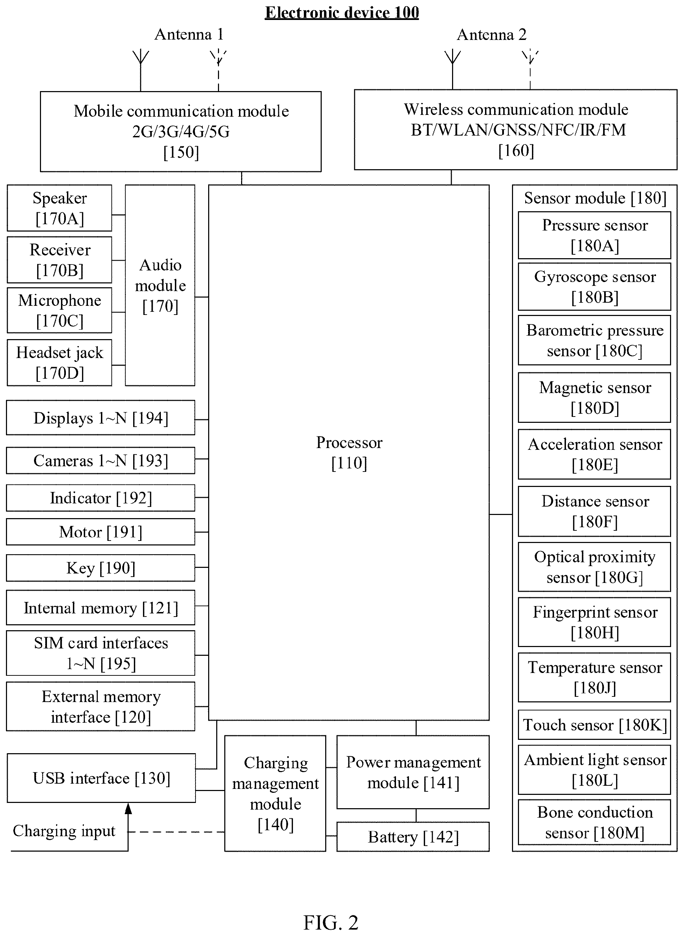

The following describes a hardware structure of the electronic device 100. Refer to FIG. 2. FIG. 2 is a schematic diagram of a hardware structure of the electronic device 100 according to an embodiment of this application.

The electronic device 100 may include a processor 110, a charging management module 140, a power management module 141, a battery 142, and a display 194. Optionally, the electronic device 100 may further include an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like. It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If needing to use the instructions or the data again, the processor 110 may directly invoke the instructions or the data from the memory, to prevent repeated access and reduce waiting time of the processor 110, thereby improving system efficiency. The processor 110 invokes the instructions or the data stored in the memory, so that the electronic device 100 performs the always on display method performed by the electronic device in the following method embodiments.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. The power management module 141 may alternatively be disposed in the processor 110.

The electronic device 100 implements a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information. The display 194 is configured to display an image, a video, and the like. The display 194 includes a display panel. In some embodiments, the electronic device 100 may include one or N displays 194, where N is a positive integer greater than 1. The display 194 may be an outward foldable screen, that is, a display folded outward.

In addition, an operating system, such as iOS or Android, runs on the foregoing components. An operating system of the electronic device 100 may use a layered architecture, an event-driven architecture, a microkernel architecture, a microservice architecture, or a cloud architecture. In the embodiments of this application, an Android system with a layered architecture is used as an example to describe a software structure of the electronic device 100. It should be noted that, although the embodiments of this application are described by using the Android system as an example, the basic principle thereof is also applicable to an electronic device of another operating system.

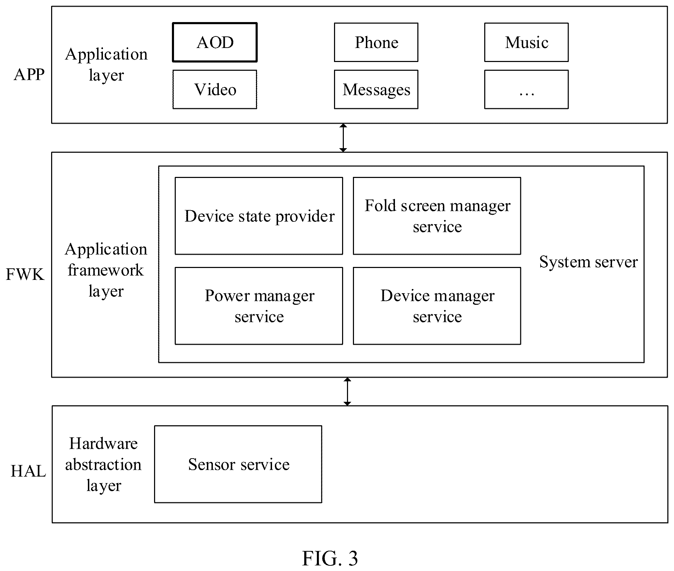

FIG. 3 is a block diagram of a software structure of the electronic device 100 according to an embodiment of this application. The software structure is a layered architecture. In the layered architecture, software is divided into several layers, and each layer has a clear role and task. Layers communicate with each other through a software interface. In some embodiments of this application, the operating system (for example, the Android system runs on the AP) may be divided into three layers from top to bottom: an application (application, APP) layer, an application framework (framework, FWK) layer, and a hardware abstraction layer (hardware abstraction layer, HAL).

The application layer may include a series of application packages. As shown in FIG. 3, the application packages may include applications such as AOD, phone, music, video, and messages. The application layer may further include a system UI (systemUI), and the systemUI is used to display an interface of the electronic device, for example, display a screen-off interface (including a time, a date, an icon, and the like), display a screen-on interface, and display notification information. The AOD application may monitor a screen posture of the device, and display an AOD interface and the like based on the screen posture, so as to implement intelligence of always on display.

The application framework layer provides an application programming interface (application programming interface, API) and a programming framework for an application at the application layer. The application framework layer includes some predefined functions. As shown in FIG. 3, the application framework layer may include a system server (SystemSever) and the like. The SystemSever may include a device state provider (Device State Provider), a fold screen manager service (Fold Screen Manager Service), a power manager service (Power Manager Service), a device manager service (Device Manager Service), and the like.

The SystemSever is responsible for starting and managing the entire application framework layer, and may be specifically responsible for scheduling a start procedure of the application, creating and managing a process, creating and managing a window, and the like.

The Device State Provider is a module in the SystemSever and is used to provide a screen posture, for example, an unfolded state and a folded state. Specifically, attitude sensor data (for example, an angle between the main screen and the back screen) and Hall sensor data (for example, a magnetic field strength between the main screen and the back screen) may be obtained from the hardware abstraction layer, and a current screen posture is determined based on the sensor data.

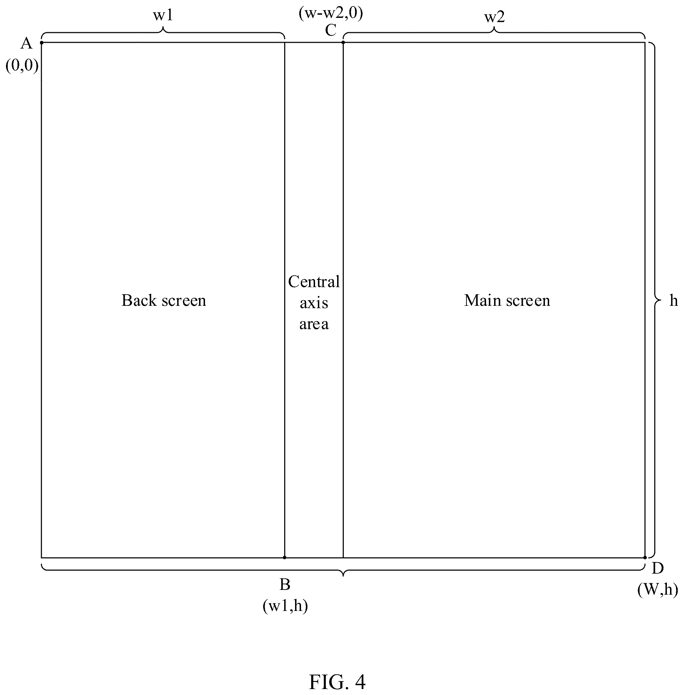

The Fold Screen Manager Service is a module in the SystemSever, and is used to manage screen display of the outward foldable-screen electronic device. A user interface may be displayed on the main screen, the back screen, or the full screen based on coordinates formulated by a dual-screen (that is, the main screen and the back screen) display solution. For example, the AOD interface may be displayed on the main screen of the outward foldable-screen mobile phone, the AOD interface may be displayed on the back screen of the outward foldable-screen mobile phone, or the AOD interface may be displayed on the entire screen of the outward foldable-screen mobile phone. Certainly, screen-on display may alternatively be performed on the user interface on the main screen of the outward foldable-screen mobile phone. This is not limited herein. For the coordinates formulated in the dual-screen display solution, refer to FIG. 4. As shown in FIG. 4, the outward foldable screen has a total screen width of w and a height of h. After being unfolded, the outward foldable screen may be divided into three areas from left to right, that is, the back screen, a central axis area, and the main screen. During back-screen display, an actual display area is [(0, 0)-(w1, h)], and (0, 0) and (w1, h) are coordinates of diagonal points (that is, a point A and a point B) of the back-screen display area. During main screen display, an actual display area is [(w-w2, 0)-(w, h)], and (w-w2, 0) and (w, h) are coordinates of diagonal points (that is, a point C and a point D) of the main screen display area. When the outward foldable screen is in the unfolded state, all areas in the entire screen may be displayed. When the outward foldable screen is in the folded state, display may be performed on the back screen and the main screen, and display is not performed in the central axis area. When the main screen and the back screen are switched to each other, the display area may be switched based on the foregoing coordinates.

The Power Manager Service is a module in the SystemSever, and is one of system services responsible for managing and coordinating power management of the device. Common functions include screen-on, screen-off, brightness adjustment, low-power mode, and keeping the CPU awake, which all may be coordinated and processed by the Power Manager Service. For example, the Power Manager Service may monitor a change of an on/off state of the screen, so as to control start and end of displaying the AOD interface. In the embodiment of this application, the screen of the electronic device may be classified into an off state, an on state, and a doze state. The off state (OFF state) indicates that the screen of the electronic device is off. The on state (ON state) indicates that the screen of the electronic device is on. The doze state (Doze state) indicates that the screen of the electronic device sleeps in a low-power state. The change of the on/off state may include changing the screen from the ON state to the OFF state, changing the screen from the ON state to the Doze state, changing the screen from the OFF state to the Doze state, changing the screen from the Doze state to the ON state, changing the screen from the OFF state to the ON state, or the like.

The Device Manager Service is a module in the SystemSever and is configured to provide a screen orientation of the device. For example, the main screen of the outward foldable-screen mobile phone faces upward, and the main screen of the outward foldable-screen mobile phone faces downward. Specifically, data such as an attitude angle and an acceleration may be obtained from the hardware abstraction layer, and the screen orientation of the current device is determined based on the data.

The hardware abstraction layer is an interface layer between an operating system kernel and a hardware circuit, and an objective of the hardware abstraction layer is to abstract hardware. The hardware abstraction layer hides hardware interface details of a specific platform, and can provide a virtual hardware platform for the operating system. As shown in FIG. 3, the hardware abstraction layer may include a sensor service (Sensor Service), and the like. The Sensor Service may provide information such as sensor data, an attitude angle, and an acceleration, for example, provide sensor data for the Device State Provider, and provide information such as an attitude angle and an acceleration for the Device Manager Service.

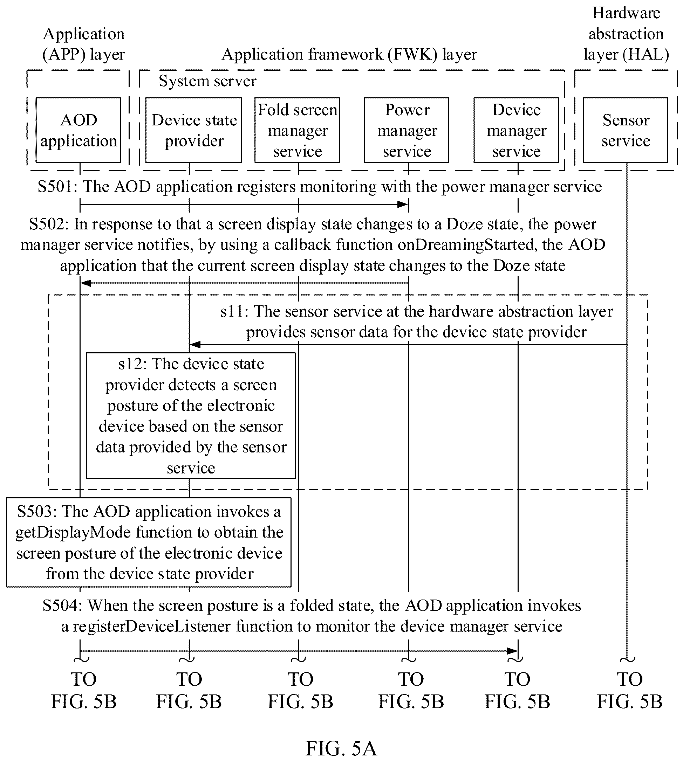

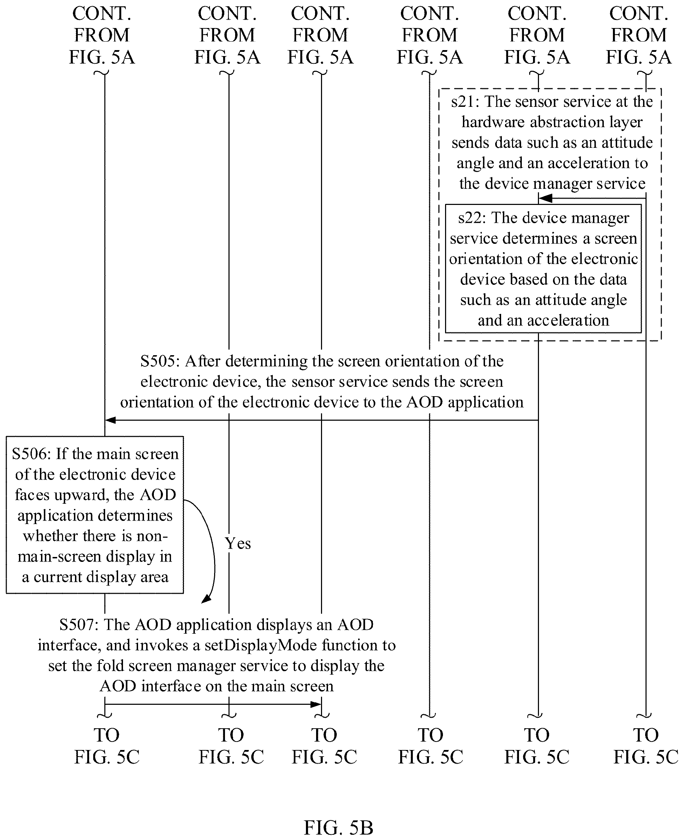

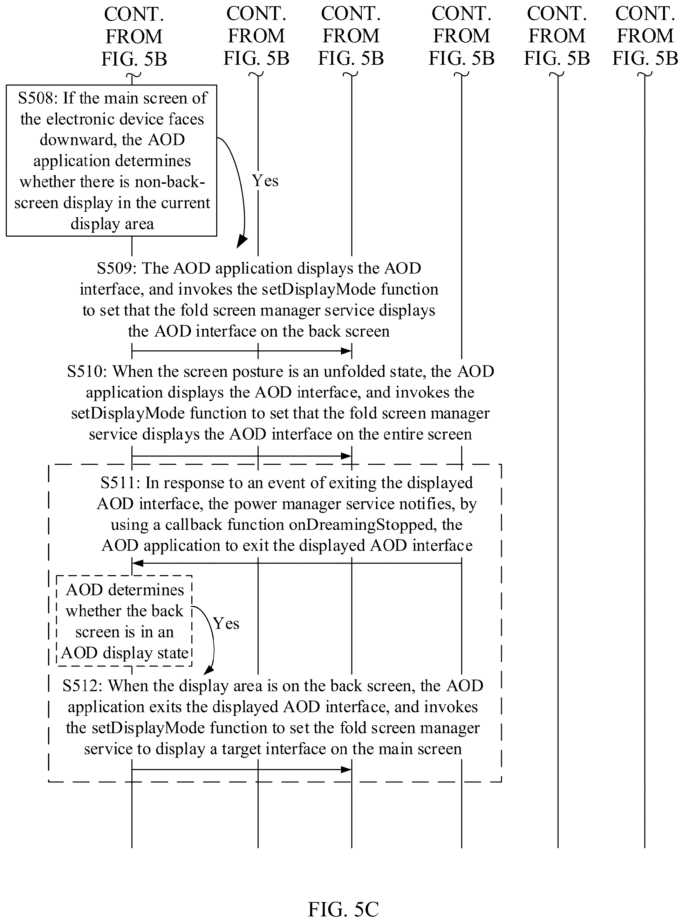

Based on the foregoing software structure, an embodiment of this application provides a schematic flowchart of an always on display method. As shown in FIG. 5A, FIG. 5B, and FIG. 5C, the always on display method includes the following steps S501 to S512.

S501: An AOD application registers monitoring with a power manager service.

In this embodiment of this application, an electronic device may enable an AOD function to reduce screen-on power consumption caused when a user views information such as a time and a date. The AOD application may register monitoring with the power manager service in a static configuration mode. The so-called monitoring refers to a mechanism used to monitor occurrence of an event and perform a corresponding operation when the event occurs. An event specifically monitored by the AOD application is whether a screen display state of the power manager service changes to a Doze state or whether the screen display state of the power manager service changes from the Doze state to an ON state.

S502: In response to that the screen display state changes to the Doze state, the power manager service notifies the AOD application that the current screen display state has changed to the Doze state by using a callback function onDreamingStarted.

In this embodiment of this application, an event that the screen display state changes to the Doze state may be a screen-off operation of the user. The screen-off operation may be a screen-lock operation performed by the user on the electronic device, to trigger the screen display state to change from the ON state to the Doze state. Alternatively, the screen-off operation may be an operation that the user touches the screen after the screen of the electronic device is turned off, to trigger the screen display state to change from an OFF state to the Doze state. When the current screen display state has changed to the Doze state, the AOD application needs to prepare to display an AOD interface, that is, start to perform the following steps S503~S510.

S503: The AOD application invokes a getDisplayMode function to obtain a screen posture of the electronic device from a device state provider.

In this embodiment of this application, the AOD application needs to obtain the screen posture of the electronic device in real time. The screen posture herein may include a folded state, an unfolded state, and the like. When the screen posture is the folded state, steps S504~S510 are performed. When the screen posture is the unfolded state, step S511 is performed.

In addition, the AOD application may invoke a registerDeviceListener function to monitor the device state provider. An event specifically monitored is whether the screen posture determined by the device state provider changes (for example, the user folds the unfolded electronic device, or unfolds the folded electronic device). If the AOD application monitors that the screen posture changes, steps S503~S511 are performed again. Based on this manner, intelligence and accuracy of always on display can be improved.

Optionally, when the Device State Provider determines the screen posture of the electronic device, a specific implementation may include steps s11 and s12. There is no time sequence relationship between steps s11 and s12 and steps S501 and S502, and the electronic device may always perform steps s11 and s12.

s11: The sensor service at the hardware abstraction layer provides sensor data for the device state provider. Correspondingly, the device state provider receives the sensor data.

The sensor data may be first information, and the first information includes attitude sensor data (for example, an angle between the main screen and the back screen), Hall sensor data (for example, whether the electronic device is in the folded state), and the like.

s12: The device state provider detects the screen posture of the electronic device based on the sensor data provided by the sensor service.

In a specific implementation, when the sensor data is attitude sensor data, the screen posture of the electronic device may be determined based on the angle between the main screen and the back screen. When the sensor data is Hall sensor data, the screen posture of the electronic device may be determined based on whether the electronic device is in the folded state. When the sensor data is attitude sensor data and Hall sensor data, the screen posture of the electronic device may be determined with reference to the angle between the main screen and the back screen and whether the electronic device is in the folded state. This is not limited herein. Based on this manner, accuracy of detecting the screen posture of the electronic device can be improved. S504: When the screen posture is the folded state, the AOD application invokes the registerDeviceListener function to monitor the device manager service.

An event specifically monitored is whether a screen orientation of the electronic device determined by the device manager service changes (for example, the user flips the electronic device). If the AOD application monitors that the screen posture changes, steps S505~S509 are performed again.

S505: After determining the screen orientation of the electronic device, the sensor service sends the screen orientation of the electronic device to the AOD application. Correspondingly, the AOD application obtains the screen orientation of the electronic device.

In this embodiment of this application, the screen orientation of the electronic device may be an orientation of the main screen, for example, the main screen faces upward or the main screen faces downward. Optionally, the screen orientation of the electronic device may alternatively be an orientation of the back screen, for example, the back screen faces upward or the back screen faces downward. In this embodiment of this application, that the main screen faces upward may alternatively be understood as that the back screen faces downward, and that the main screen faces downward may alternatively be understood as that the back screen faces upward.

Optionally, a specific implementation in which the sensor service determines the screen orientation of the electronic device includes steps s21 and s22. There is no time sequence relationship between steps s21 and s22 and steps S504 and S505, and the electronic device may always perform steps s21 and s22.
s21: The sensor service at the hardware abstraction layer sends data such as an attitude angle and an acceleration to the device manager service. Correspondingly, the device manager service receives the data such as an attitude angle and an acceleration.
s22: The device manager service determines the screen orientation of the electronic device based on the data such as an attitude angle and an acceleration.

In this embodiment of this application, when the electronic device is in a standstill state, the acceleration sensor is used to obtain a vertical acceleration of the electronic device in this case. The screen orientation of the electronic device may be determined based on the direction of the vertical acceleration. Specifically, if the direction of the vertical acceleration is downward (for example, the vertical acceleration is 9.8), it is considered that the main screen of the electronic device faces upward; and if the direction of the vertical acceleration is upward (for example, the vertical acceleration is -9.8), it is considered that the main screen of the electronic device faces downward.

Optionally, the attitude angle of the electronic device is less than a preset value. The attitude angle refers to an angle between a display plane of the electronic device and a horizontal plane. The preset value may be 8 degrees, or may be any preset value, which is not limited herein. Based on this manner, it can be ensured that the display plane of the electronic device is level with the horizontal plane within a specific error range as far as possible, which helps improve accuracy of determining the screen orientation of the electronic device.

It should be noted that sending and receiving between modules are actually implemented by using a function. If the main screen of the electronic device faces upward, steps S506 and S507 are performed. If the main screen of the electronic device faces downward, steps S509 and S510 are performed.

S506: If the main screen of the electronic device faces upward, the AOD application determines whether there is non-main-screen display in a current display area.

In this embodiment of this application, if there is no non-main-screen display in the current display area (that is, the display area is on the main screen), the AOD application displays the AOD interface, and the display area does not need to be reset. If there is non-main-screen display in the current display area (that is, the display area is on the back screen or the entire screen), step S507 is performed.

S507: The AOD application displays the AOD interface, and invokes a setDisplayMode function to set the fold screen manager service to display the AOD interface on the main screen. Correspondingly, the fold screen manager service displays the AOD interface on the main screen. S508: If the main screen of the electronic device faces downward, the AOD application determines whether there is non-back-screen display in the current display area.

In this embodiment of this application, if there is no non-back-screen display in the current display area (that is, the display area is on the back screen), the AOD application displays the AOD interface, and the display area does not need to be reset; and if there is non-back-screen display in the current display area (that is, the display area is on the main screen or the entire screen), step S509 is performed.

S509: The AOD application displays the AOD interface, and invokes the setDisplayMode function to set that the fold screen manager service displays the AOD interface on the back screen. Correspondingly, the fold screen manager service displays the AOD interface on the back screen.

S510: When the screen posture is the unfolded state, the AOD application displays the AOD interface, and invokes the setDisplayMode function to set that the fold screen manager service displays the AOD interface on the entire screen. Correspondingly, the fold screen manager service displays the AOD interface on the entire screen.

In this embodiment of this application, when the screen posture is the unfolded state, the user can see the entire screen. The display may not be divided into the main screen and the back screen, and the AOD interface is directly displayed on the entire screen without determining the screen orientation of the electronic device.

Optionally, the always on display method may further include the following steps S511 and S512.

S511: In response to an event of exiting the displayed AOD interface, the power manager service notifies, by using a callback function onDreamingStopped, the AOD application to exit the displayed AOD interface.

S512: When the display area is on the back screen, the AOD application exits the displayed AOD interface, and invokes the setDisplayMode function to set the fold screen manager service to display a target interface on the main screen. Correspondingly, the fold screen manager service displays the target interface on the main screen.

In this embodiment of this application, an event of exiting the displayed AOD interface may be receiving an incoming call event, an alarm clock event, a notification event, or the like. In this case, the target interface is displayed on the main screen, and the screen display state changes from the Doze state to the ON state. If the display area is on the back screen in this case, the fold screen manager service needs to be set to display the target interface on the main screen. If the display area is on the main screen in this case, the target interface is directly displayed on the main screen, and the display area does not need to be reset. Based on this manner, the large display area of the main screen may be used to present more finer interfaces to the user. The target interface herein is an interface corresponding to an event of exiting the displayed AOD interface. For example, a target interface corresponding to an incoming call event is an incoming call interface, a target interface corresponding to an alarm clock event is an alarm clock interface, and a target interface corresponding to a notification event is a notification interface, which is not limited herein.

The event of exiting the displayed AOD interface may alternatively be arriving a time point for exiting the displayed AOD interface. When the time point for exiting the displayed AOD interface arrives, the back screen exits the displayed AOD interface. For example, it is assumed that the mode of displaying the AOD interface is touch display. That is, after the user touches the screen, the AOD interface is automatically exited after the AOD interface has been displayed for 5 seconds (the 5 seconds herein is only an example, and may be another preset value). In this case, the electronic device displays the AOD interface on the back screen and turns off the AOD interface on the main screen. When an end time point of 5 seconds for displaying the AOD interface on the back screen arrives, the AOD interface is turned off on the back screen. If the electronic device is flipped within 5 seconds, re-timing may be performed or may not be performed. For example, it is assumed that the electronic device is flipped at the 2nd second within 5 seconds during which the AOD interface has been displayed. If the electronic device performs re-timing for 5 seconds, when an end time point (that is, an end time point of the 7th second) of the re-timed 5 seconds arrives, the AOD interface is turned off on the back screen; and if the electronic device does not perform re-timing for 5 seconds, when an end time point (that is, the end time point of the 5th second) of 3 seconds for continuing timing arrives, the AOD interface is turned off on the back screen. Based on this manner, power consumption of the electronic device can be reduced.
**I. Implementation in which the AOD interface is displayed at any time point.**

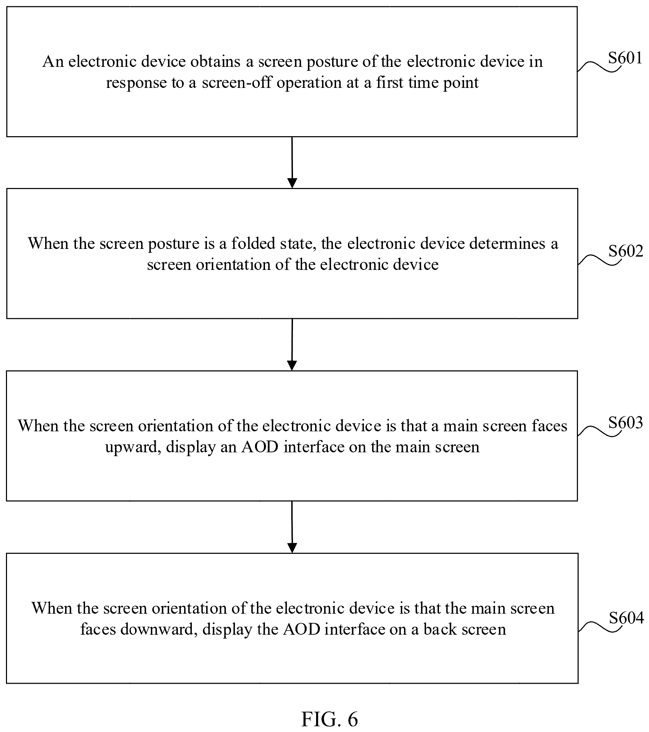

Based on the foregoing description, the following further describes an always on display method provided in an embodiment of this application in detail. As shown in FIG. 6, the always on display method includes the following steps S601~S604. The method shown in FIG. 6 may be performed by the foregoing mentioned electronic device. Alternatively, the method shown in FIG. 6 may be performed by a chip in the electronic device, which is not limited in this embodiment of this application. An example in which the method is performed by the electronic device is used in FIG. 6 for description. The electronic device includes a display. The display includes a main screen and a back screen, and the main screen and the back screen are two display areas of the same display. When the electronic device is folded, the main screen and the back screen are oriented in opposite directions. When the electronic device is unfolded, the main screen and the back screen are oriented in a same direction, and the display area is an entire display screen.

S601: The electronic device obtains a screen posture of the electronic device in response to a screen-off operation at a first time point.

In this embodiment of this application, the first time point is any time point. The electronic device may enable an AOD function to reduce screen-on power consumption caused when a user views information such as a time and a date. An AOD application may register monitoring with a Power Manager Service in a static configuration mode. At the first time point, after the user performs the screen-off operation on the electronic device, the electronic device needs to detect a current screen posture. The screen posture herein may include a folded state, an unfolded state, and the like. The screen-off operation herein may be a screen-lock operation performed by the user on the electronic device, and the screen-off operation may trigger a screen display state to change from an ON state to a Doze state. Alternatively, after the screen of the electronic device is off, the screen-off operation may be an operation that the user touches the screen, and in this case, the screen-off operation may trigger the screen display state to change from an OFF state to the Doze state, which is not limited herein. When the screen-off operation performed by the user is a screen-lock operation, the mode of displaying the AOD interface may be either normally on display, timing display, or touch display, that is, all the three modes are met. When the screen-off operation performed by the user is a screen-touch operation, the mode of displaying the AOD interface can only be touch display. It should be noted that when the AOD application monitors that the screen posture changes (for example, the user folds the unfolded electronic device or unfolds the folded electronic device), the AOD application needs to obtain the screen posture again, and subsequently, step S602 or step S603 further needs to be performed again.

In a software structure of the electronic device, an application layer includes an AOD application. An application framework layer includes a SystemSever, and the SystemSever includes a Device State Provider, a Fold Screen Manager Service, a Power Manager Service, and a Device Manager Service. A hardware abstraction layer includes a Sensor Service. After the AOD function is enabled, for a specific implementation process of obtaining the screen posture of the electronic device, refer to the foregoing steps S501~S503.

The electronic device may enable the AOD application, and the AOD application registers monitoring with the Power Manager Service. An event specifically monitored by the AOD application is whether the screen display state of the Power Manager Service changes to the Doze state or whether the screen display state of the Power Manager Service changes from the Doze state to the ON state. In response to that the screen display state changes to the Doze state, the Power Manager Service notifies, by using a callback function onDreamingStarted, the AOD application that the current screen display state changes to the Doze state. The AOD application invokes the getDisplayMode function to obtain the screen posture of the electronic device from the device state provider.

In a possible implementation, when the electronic device obtains the screen posture of the electronic device, a specific implementation may be as follows: The electronic device obtains first information, where the first information includes an angle between the main screen and the back screen, and/or whether the electronic device is in the folded state; and the electronic device determines the screen posture of the electronic device based on the first information. The following describes three cases in which the electronic device determines the screen posture of the electronic device based on the first information in detail.

Case 1: The first information includes the angle between the main screen and the back screen.

In a specific implementation, an attitude sensor in the electronic device may detect the angle between the main screen and the back screen, and may determine the screen posture of the electronic device based on the angle between the main screen and the back screen. The so-called angle between the main screen and the back screen refers to an angle between a plane on which a front face of the main screen is located and a plane on which a front face of the back screen is located, where the front face of the main screen is a plane on which the display area of the main screen is located, and the front face of the back screen is a plane on which the display area of the back screen is located.

For a specific implementation process, refer to the foregoing steps s11 and s12, that is, the Sensor Service in the hardware abstraction layer may provide attitude sensor data (that is, the angle between the main screen and the back screen) to the Device State Provider. The Device State Provider determines the screen posture of the electronic device based on the attitude sensor data provided by the Sensor Service.

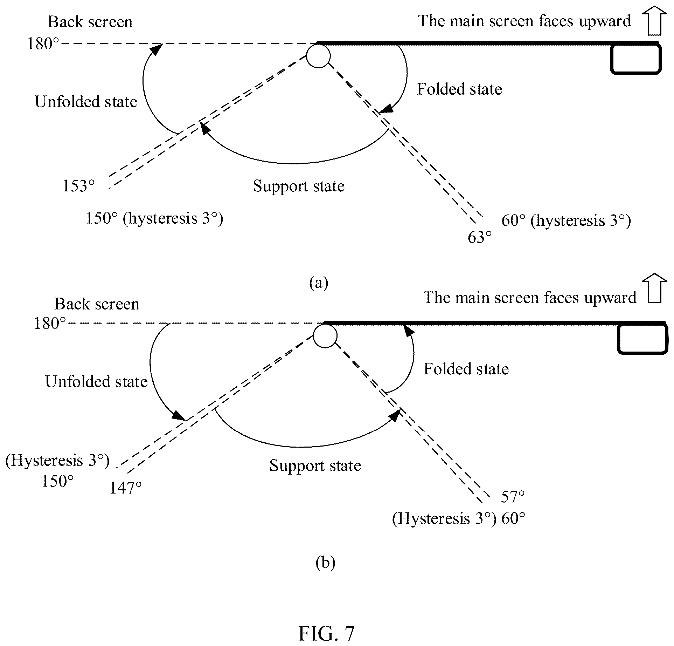

As shown in (a) of FIG. 7, in a process of unfolding an outward foldable screen of the electronic device, when the angle between the main screen and a back screen is 0~60 degrees, the screen posture of the electronic device is determined as the folded state. When the included angle between the main screen and the back screen is 63~153 degrees, the screen posture of the electronic device is determined as a support state. When the angle between the main screen and the back screen is 153~180 degrees, the screen posture of the electronic device is determined as the unfolded state.

As shown in (b) of FIG. 7, in a process of closing the outward foldable screen of the electronic device, when the angle between the main screen and a back screen is 150~180 degrees, the screen posture of the electronic device is determined as the unfolded state; when the angle between the main screen and the back screen is 57~147 degrees, the screen posture of the electronic device is determined as the support state; and when the angle between the main screen and the back screen is 0~57 degrees, the screen posture of the electronic device is determined as the folded state.

It should be noted that, in a process of unfolding the outward foldable screen of the electronic device, when the folded state is changed to the support state, there is 3-degree hysteresis, that is, when the angle between the main screen and the back screen is 60~63 degrees, it is still considered that the screen posture of the electronic device is the folded state; and when the support state is changed to the unfolded state, if the angle between the main screen and the back screen is 153 degrees, in this case, it is considered that the screen posture of the electronic device is the support state. Similarly, in a process of closing the outward foldable screen of the electronic device, when the unfolded state is changed to the support state, there is 3-degree hysteresis, that is, when the angle between the main screen and the back screen is 147~150 degrees, it is still considered that the screen posture of the electronic device is the unfolded state; or when the support state is changed to the folded state, if the angle between the main screen and the back screen is 57 degrees, in this case, it is considered that the screen posture of the electronic device is the support state. That is, in a process of changing the folded state to the support state or changing the support state to the folded state, a specific error rate can be ensured in a 3-degree hysteresis manner, and a previous screen posture is used as a screen posture in a hysteresis angle, thereby improving accuracy of detecting the screen posture of the electronic device. In a process of changing the support state to the folded state or changing the folded state to the support state, when the angle between the main screen and the back screen is at a boundary value, a previous screen posture is also used as a current screen posture, thereby improving accuracy of detecting the screen posture of the electronic device. Certainly, a degree of hysteresis may be any predefined value, and the 3-degree hysteresis is only used as an example herein, which is not limited herein.

Case 2: The first information includes whether the electronic device is in the folded state.

In a specific implementation, a Hall sensor in the electronic device may detect magnetic field strength between the main screen and the back screen, and may determine whether the electronic device is in the folded (closed) state based on the magnetic field strength between the main screen and the back screen. For example, when the magnetic field strength between the main screen and the back screen is greater than or equal to a preset magnetic field strength value, it is considered that the electronic device is in the folded (closed) state, and in this case, it may be determined that the screen state of the electronic device is the folded state; and when the magnetic field strength between the main screen and the back screen is less than the preset magnetic field strength value, it is considered that the electronic device is not in the folded (closed) state, and in this case, it may be determined that the screen state of the electronic device is the unfolded state or the support state.

For a specific implementation process, refer to the foregoing steps s11 and s12, that is, the Sensor Service in the hardware abstraction layer may provide the Hall sensor data (that is, whether the electronic device is in the folded state) to the Device State Provider. The Device State Provider determines the screen posture of the electronic device based on the Hall sensor data provided by the Sensor Service.

Case 3: The first information includes the angle between the main screen and the back screen and whether the electronic device is in the folded state.

In a specific implementation, the electronic device may jointly determine the screen posture of the electronic device based on the angle (that is, the attitude sensor data) between the main screen and the back screen and whether the electronic device is in the folded state (that is, the Hall sensor data). That is, the screen posture of the electronic device may be determined together with reference to the foregoing case 1 and case 2. Based on this manner, accuracy of detecting the screen posture of the electronic device can be further improved.

For example, it is assumed that the electronic device determines that the screen posture of the electronic device is the folded state based on the angle (that is, the attitude sensor data) between the main screen and the back screen. In this case, the screen posture of the electronic device needs to be further determined based on the Hall sensor data. If the Hall sensor data indicates that the electronic device is in the folded state, the determined screen posture is also the folded state, and finally, the screen posture of the electronic device may be determined as the folded state. If the Hall sensor data indicates that the electronic device is not in the folded state, data detected by the attitude sensor and/or the Hall sensor needs to be obtained again to determine the screen posture of the electronic device.

S602: When the screen posture is the folded state, the electronic device determines a screen orientation of the electronic device.

In this embodiment of this application, when determining that the screen posture is the folded state, the electronic device may further determine the screen orientation of the electronic device based on the data such as an attitude angle and an acceleration, so that the AOD interface is subsequently displayed based on the screen orientation.

The screen orientation herein may be an orientation of the main screen, for example, the main screen faces upward or the main screen faces downward. Optionally, the screen orientation of the electronic device may alternatively be an orientation of the back screen, for example, the back screen faces upward or the back screen faces downward. In this embodiment of this application, that the main screen faces upward may alternatively be understood as that the back screen faces downward, and that the main screen faces downward may alternatively be understood as that the back screen faces upward. Details are not described subsequently.

For a specific implementation process, refer to the foregoing step S505, that is, when the screen posture is the folded state, the AOD application invokes the registerDeviceListener function to monitor the Device Manager Service. An event specifically monitored is whether the screen orientation of the electronic device determined by the Device Manager Service changes (for example, the user flips the electronic device). If the AOD application monitors that the screen posture changes, the screen orientation of the electronic device is redetermined; and after determining the screen orientation of the electronic device, the Device Manager Service sends the screen orientation of the electronic device to the AOD application. Correspondingly, the AOD application may obtain the screen orientation of the electronic device.

In a possible implementation, when the electronic device determines the screen orientation of the electronic device, a specific implementation may be as follows: The electronic device obtains a vertical acceleration when the electronic device is in a standstill state; where if a direction of the vertical acceleration is downward, the electronic device determines that the main screen of the electronic device faces upward; and if a direction of the vertical acceleration is upward, the electronic device determines that the main screen of the electronic device faces downward.

In a specific implementation, when the electronic device is in a standstill state, an acceleration sensor is used to obtain the vertical acceleration of the electronic device in this case. The screen orientation of the electronic device may be determined based on the direction of the vertical acceleration. Specifically, if the direction of the vertical acceleration is downward (for example, the vertical acceleration is 9.8), it is considered that the main screen of the electronic device faces upward; and if the direction of the vertical acceleration is upward (for example, the vertical acceleration is -9.8), it is considered that the main screen of the electronic device faces downward.

Optionally, that the electronic device obtains a vertical acceleration when the electronic device is in a standstill state may be specifically that the electronic device obtains a vertical acceleration when the electronic device is in a standstill state and the attitude angle is less than a preset value. The attitude angle refers to an angle between a display plane of the electronic device and a horizontal plane. The preset value may be 8 degrees, or may be any preset value, which is not limited herein. Based on this manner, it can be ensured that the display plane of the electronic device is level with the horizontal plane within a specific error range as far as possible, which helps improve accuracy of determining the screen orientation of the electronic device.

S603: When the screen orientation of the electronic device is that the main screen faces upward, display an AOD interface on the main screen.

S604: When the screen orientation of the electronic device is that the main screen faces downward, display the AOD interface on the back screen.

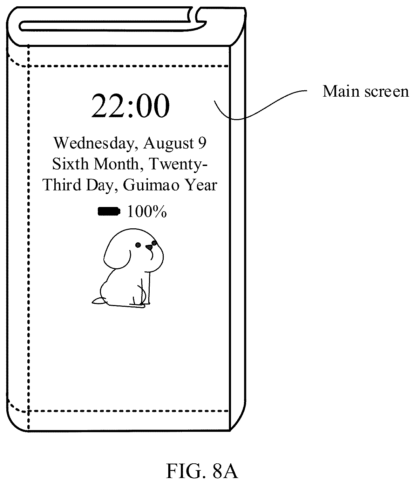

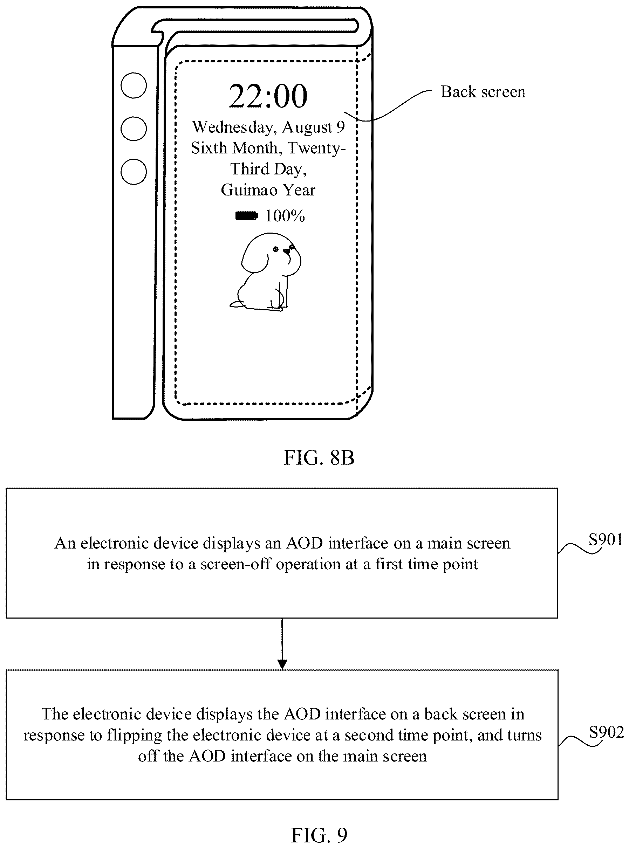

For steps S602~S604, it may also be understood that the electronic device displays the AOD interface on the main screen based on that the screen posture is the folded state and the main screen faces upward; and the electronic device displays the AOD interface on the back screen based on that the screen posture is the folded state, and the main screen faces downward. That is, when the screen posture of the electronic device is the folded state and the main screen faces upward, it indicates that in this case, the user sees the main screen, and the electronic device may automatically display the AOD interface on the main screen (as shown in FIG. 8A); and when the main screen of the electronic device faces downward, it indicates that in this case, the user sees the back screen, and the electronic device may automatically display the AOD interface on the back screen (as shown in FIG. 8B). Based on this manner, intelligence of always on display on an outward foldable-screen mobile phone can be implemented, and convenience of the user in viewing information such as a time and a date can be improved.

In a possible implementation, for a specific implementation in which the electronic device displays the AOD interface on the main screen, refer to the foregoing steps S506~S509, that is, if the main screen of the electronic device faces upward, the AOD application determines whether there is non-main-screen display in the current display area; and if there is no non-main-screen display in the current display area (that is, the display area is on the main screen), the AOD application displays the AOD interface, and the display area does not need to be reset. If there is non-main-screen display in the current display area (that is, the display area is on the back screen or the entire screen), the AOD application displays the AOD interface, and invokes a setDisplayMode function to set a Fold Screen Manager Service to display the AOD interface on the main screen. Correspondingly, the Fold Screen Manager Service displays the AOD interface on the main screen. It may be understood that if there is no non-main-screen display in the current display area, the electronic device needs to set the display mode to be main-screen display. Based on the set display mode, the AOD interface is displayed on the main screen.

If the main screen of the electronic device faces downward, the AOD application determines whether there is non-back-screen display in the current display area; and if there is no non-back-screen display in the current display area (that is, the display area is on the back screen), the AOD application displays the AOD interface, and the display area does not need to be reset. If there is non-back-screen display in the current display area (that is, the display area is on the main screen or the entire screen), the AOD application displays the AOD interface, and invokes the setDisplayMode function to set the Fold Screen Manager Service to display the AOD interface on the back screen. Correspondingly, the Fold Screen Manager Service displays the AOD interface on the back screen. It may be understood that if there is non-main-screen display in the current display area, the electronic device needs to set the display mode to be back-screen display; and based on the set display mode, the AOD interface is displayed on the back screen. Based on this manner, accuracy of performing AOD display when the screen of the electronic device is switched can be improved, and power waste caused by an invalid screen switching operation can be avoided.

In a possible implementation, when displaying the AOD interface, the electronic device detects an event of exiting the AOD interface. In this case, the displayed AOD interface is exited (that is, the AOD interface is not displayed or the AOD interface is turned off). The event of exiting the AOD interface may be an incoming call event, an alarm clock event, a notification event, or the like, or may be arriving a time point of exiting the AOD interface. The following describes different types of events of exiting the AOD interface in detail.

Type 1: The event of exiting the AOD interface is an incoming call event.

Optionally, after the electronic device displays the AOD interface on the main screen, the method further includes: displaying an incoming call interface on the main screen in response to the incoming call event. For example, when the electronic device displays the AOD interface on the main screen, an incoming call is received. In this case, the electronic device directly displays the incoming call interface on the main screen. Based on this manner, the large display area of the main screen may be used to present more finer interfaces to the user.

Optionally, after the electronic device displays the AOD interface on the back screen, the method further includes: displaying the incoming call interface on the main screen in response to the incoming call event, and exiting the displayed AOD interface on the back screen. For example, when the electronic device displays the AOD interface on the back screen, the incoming call is received. In this case, the electronic device displays the incoming call interface on the main screen, and the displayed AOD interface is exited on the back screen. Based on this manner, the large display area of the main screen may be used to present more finer interfaces to the user.

Type 2: The event of exiting the AOD interface is an alarm clock event.

Optionally, after the electronic device displays the AOD interface on the main screen, the method further includes: displaying an alarm clock interface on the main screen in response to the alarm clock event. For example, when the electronic device displays the AOD interface on the main screen, an alarm clock set by the electronic device rings. In this case, the alarm clock interface is directly displayed on the main screen. Based on this manner, the large display area of the main screen may be used to present more finer interfaces to the user.

Optionally, after the electronic device displays the AOD interface on the back screen, the method further includes: displaying an alarm clock interface on the main screen in response to the alarm clock event, and exiting the displayed AOD interface on the back screen. For example, when the electronic device displays the AOD interface on the back screen, the alarm clock set by the electronic device rings. In this case, the incoming call interface is directly displayed on the main screen. In addition, the displayed AOD interface is exited on the back screen. Based on this manner, the large display area of the main screen may be used to present more finer interfaces to the user.

Type 3: The event of exiting the AOD interface is a notification event.

Optionally, after the electronic device displays the AOD interface on the main screen, the method further includes: displaying a notification interface on the main screen in response to the notification event. For example, when the electronic device displays the AOD interface on the main screen, the electronic device receives a notification message. In this case, the electronic device directly displays the notification interface on the main screen. Based on this manner, the large display area of the main screen may be used to present more finer interfaces to the user. Optionally, after the electronic device displays the AOD interface on the back screen, the method further includes: displaying a notification interface on the main screen in response to the notification event, and exiting the displayed AOD interface on the back screen. For example, when the electronic device displays the AOD interface on the back screen, the electronic device receives the notification message. In this case, the notification interface is directly displayed on the main screen. In addition, the displayed AOD interface is exited on the back screen. Based on this manner, the large display area of the main screen may be used to present more finer interfaces to the user.

For the foregoing three types, refer to the foregoing steps S511 and S512 for a specific implementation process, that is, the Power Manager Service notifies, by using the callback function onDreamingStopped, the AOD application to exit the displayed AOD interface in response to the event of exiting the displayed AOD interface. When the display area is on the back screen, the AOD application exits the displayed AOD interface, and invokes the setDisplayMode function to set the Fold Screen Manager Service to display the target interface on the main screen. Correspondingly, the Fold Screen Manager Service displays the target interface on the main screen.

Type 4: The event of exiting the AOD interface is arriving a time point of exiting the AOD interface.

In a specific implementation, when the electronic device displays the AOD interface on the back screen, the displayed AOD interface is exited on the back screen (that is, the AOD interface is not displayed or turned off on the back screen) in response to arriving the time point of exiting the AOD interface. For example, it is assumed that the mode of displaying the AOD interface is touch display. That is, after the user touches the screen, the AOD interface is automatically exited after the AOD interface has been displayed for 5 seconds (the 5 seconds herein is only an example, and may be another preset value). In this case, the electronic device displays the AOD interface on the back screen and turns off the AOD interface on the main screen. When an end time point of 5 seconds for displaying the AOD interface on the back screen arrives, the AOD interface is turned off on the back screen. If the electronic device is flipped within 5 seconds, re-timing may be performed or may not be performed. For example, it is assumed that the electronic device is flipped at the 2nd second within 5 seconds during which the AOD interface has been displayed. If the electronic device performs re-timing for 5 seconds, when an end time point (that is, an end time point of the 7th second) of the re-timed 5 seconds arrives, the AOD interface is turned off on the back screen; and if the electronic device does not perform re-timing for 5 seconds, when an end time point (that is, the end time point of the 5th second) of 3 seconds for continuing timing arrives, the AOD interface is turned off on the back screen. Based on this manner, power consumption of the electronic device can be reduced.

For example, the electronic device is a mobile phone with an outward foldable screen. When the electronic device is in the folded state, display areas of displaying the AOD interface at different time points (for example, a first time point and a second time point) may be the same or different. For different scenarios, a form of a table may be used for description. As shown in Table 1, it is assumed that the screen posture of the mobile phone is the folded state, and the second time point is later than the first time point. If the mobile phone displays the AOD interface on the main screen at the first time point, and the mobile phone still displays the AOD interface on the main screen at the second time point, it indicates that the mobile phone is not flipped. If the mobile phone displays the AOD interface on the main screen at the first time point, and the mobile phone displays the AOD interface on the back screen at the second time point, it indicates that the mobile phone is flipped. If the mobile phone displays the AOD interface on the main screen at the first time point, and the mobile phone does not display the AOD interface at the second time point, it indicates that always on display is exited or the screen of the mobile phone is on.

If the mobile phone displays the AOD interface on the back screen at the first time point, and the mobile phone displays the AOD interface on the main screen at the second time point, it indicates that the mobile phone is flipped or an event of exiting the displayed AOD interface due to an incoming call, a notification, an alarm clock, or the like occurs. If the mobile phone displays the AOD interface on the back screen at the first time point, and the mobile phone still displays the AOD interface on the back screen at the second time point, it indicates that the mobile phone is not flipped. If the mobile phone displays the AOD interface on the back screen at the first time point, and the mobile phone does not display the AOD interface at the second time point, it indicates that always on display is exited or the screen of the mobile phone is on.

If the mobile phone does not display the AOD interface at the first time point, and the mobile phone displays the AOD interface on the main screen or the AOD interface on the back screen at the second time point, it indicates that always on display is exited or the screen of the mobile phone is on. If the mobile phone does not display the AOD interface at the first time point, and the mobile phone still does not display the AOD interface at the second time point, it indicates that the screen of the mobile phone keeps on all the time.

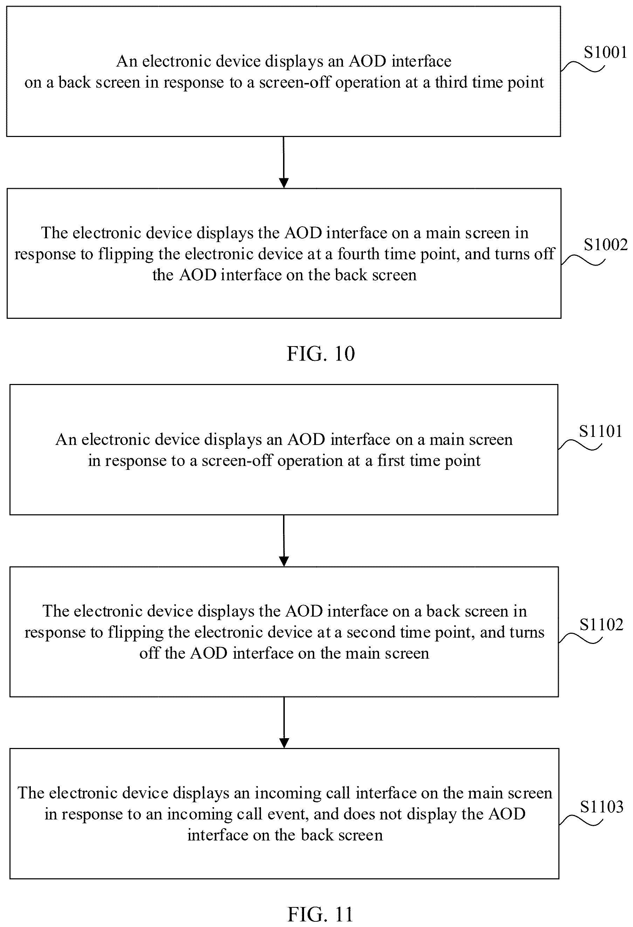

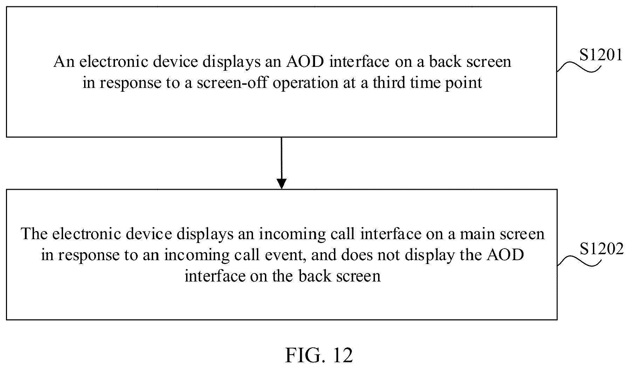

It should be noted that for a specific implementation process of the mobile phone flip scenario, refer to the following descriptions in FIG. 9 and FIG. 10, and details are not described herein again. For a scenario in which an event of exiting the displayed AOD interface due to an incoming call, a notification, an alarm clock, or the like occurs, for a specific implementation process, refer to the following descriptions in FIG. 11 and FIG. 12. Details are not described herein again.

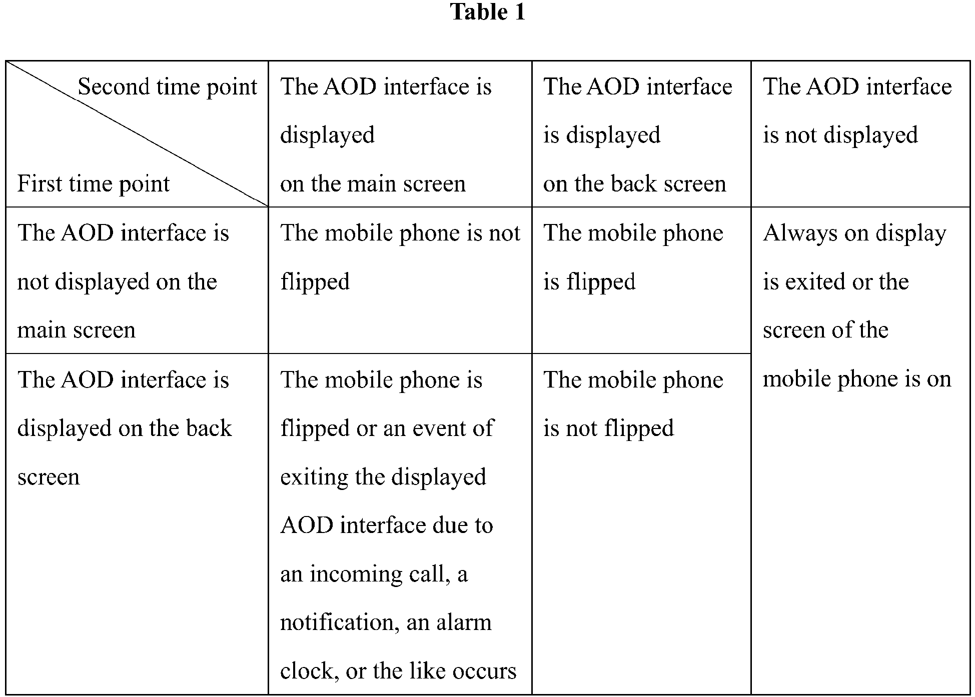

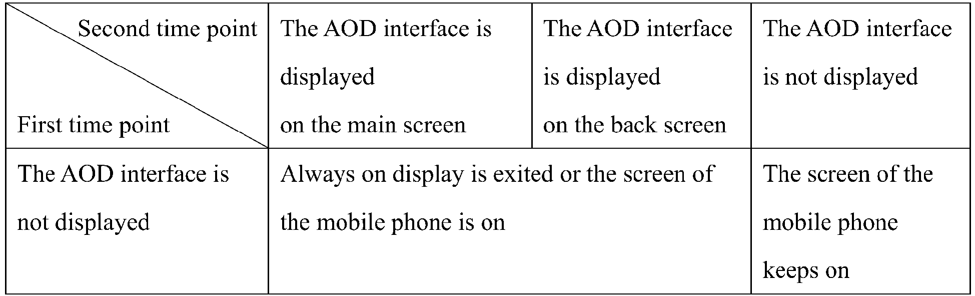

In addition, if always on display is triggered by tapping (for example, after the user locks the screen, tapping the screen to display the AOD interface), in this case, the screen orientation of the electronic device does not need to be detected, and AOD display may be directly performed based on a position in which the user taps the screen. That is, a tap operation of the user is performed on the main screen to display the AOD interface on the main screen, and a tap operation of the user is performed on the back screen to display the AOD interface on the back screen.

The following describes a case in which the screen posture is the unfolded state. In a possible implementation, the method further includes: displaying the AOD interface on the display based on that the screen posture is the unfolded state. In this embodiment of this application, when the screen posture is the unfolded state, the user can see the entire screen. In this case, the display may not be divided into the main screen and the back screen, and the AOD interface is directly displayed on the entire screen without determining the screen orientation of the electronic device.

For a specific implementation process, refer to the foregoing step S510, that is, when the screen posture is the unfolded state, the AOD application displays the AOD interface, and invokes the setDisplayMode function to set the Fold Screen Manager Service to display the AOD interface on the entire screen. Correspondingly, the Fold Screen Manager Service displays the AOD interface on the entire screen.

It can be learned that based on the method described in this application, the electronic device obtains the screen posture of the electronic device at the first time point in response to the screen-off operation. When the screen posture is the folded state, the electronic device further determines the screen orientation of the electronic device, and when the main screen of the electronic device faces upward, the electronic device displays the AOD interface on the main screen; and when the main screen of the electronic device faces downward, the electronic device displays the AOD interface on the back screen, so that intelligence of always on display on the outward foldable-screen mobile phone can be implemented, and convenience of the user in viewing information such as a time and a date can be improved.

**II. Implementation in which the AOD interface is displayed in a scenario that the electronic device is flipped.**
**1. The electronic device displays the AOD interface on the main screen at a first time point, and displays the AOD interface on the back screen at a second time point after the electronic device is flipped. The second time point is later than the first time point.**

Based on the foregoing description, the following further describes another always on display method provided in an embodiment of this application in detail. As shown in FIG. 9, the always on display method includes the following steps S901 and S902. The method shown in FIG. 9 may be performed by the foregoing mentioned electronic device. Alternatively, the method shown in FIG. 9 may be performed by a chip in the electronic device, which is not limited in this embodiment of this application. An example in which the method is performed by the electronic device is used in FIG. 9 for description. The electronic device includes a display. The display includes a main screen and a back screen, and the main screen and the back screen are two display areas of the same display. When the electronic device is folded, the main screen and the back screen are oriented in opposite directions. When the electronic device is unfolded, the main screen and the back screen are oriented in a same direction, and the display area is an entire display screen.

S901: The electronic device displays an AOD interface on a main screen in response to a screen-off operation at a first time point.

In this embodiment of this application, before the first time point, the electronic device is in a folded state, the main screen faces upward, and the main screen is on and displays a first interface. The first time point is any time point, and the first interface is any user interface. The user has performed the screen-off operation at the first time point. In this case, in response to the screen-off operation of the user, the electronic device can determine that a screen posture of the electronic device in this case is the folded state, and the main screen faces upward, that is, the AOD interface needs to be displayed on the main screen based on the foregoing method for displaying the AOD interface described in FIG. 6.

In a possible implementation, when the electronic device displays the AOD interface on the main screen in response to the screen-off operation of the user at the first time point, a specific implementation may be: obtaining the screen posture of the electronic device in response to the screen-off operation of the user at the first time point; and displaying the AOD interface on the main screen based on that the screen posture is the folded state and the main screen faces upward. Specifically, refer to descriptions in the foregoing steps S601~S603. Details are not described herein again.

In a possible implementation, when the electronic device displays the AOD interface on the main screen, a specific implementation may be: based on that the main screen faces upward and the first interface is not displayed on the main screen, setting to display the AOD interface on the main screen. That is, before the first time point, the first interface is displayed on the main screen, and the current display area is the main screen (that is, there is non-main-screen display in the current display area). Therefore, the display area needs to be reset, that is, the AOD application displays the AOD interface, and invokes a setDisplayMode function to set a Fold Screen Manager Service to display the AOD on the main screen. Correspondingly, the Fold Screen Manager Service displays the AOD interface on the main screen. It may be understood that if there is non-main-screen display in the current display area, the electronic device needs to set the display mode to be main-screen display. Based on the set display mode, the AOD interface is displayed on the main screen.

S902: The electronic device displays the AOD interface on the back screen in response to flipping the electronic device at a second time point, and turns off the AOD interface on the main screen.

In this embodiment of this application, in this case, the screen posture is still in the folded state, and the user flips the electronic device at the second time point. The second time point is later than the first time point. After the user flips the electronic device, the main screen faces downward, that is, the screen orientation of the electronic device changes. Because the AOD application invokes the registerDeviceListener function to monitor the Device Manager Service, when the AOD application monitors that the screen posture changes, the electronic device may determine the screen orientation of the electronic device again, that is, the electronic device may perform step S602 in FIG. 6 again, determines that the main screen faces downward in this case, and can determine, based on the foregoing step S604, that the AOD interface needs to be displayed on the back screen, and that the AOD interface previously displayed on the main screen is turned off.

It may be learned that based on the method described according to this application, when the electronic device is in the folded state, it is determined that the main screen faces upward and the AOD interface is displayed on the main screen in response to the screen-off operation at the first time point; and it is determined that the main screen faces downward and the AOD interface is displayed on the back screen after the electronic device is flipped at the second time point. Therefore, intelligence of always on display on the outward foldable-screen mobile phone is implemented, and convenience of the user in viewing information such as a time and a date is improved.

**2. The electronic device displays the AOD interface on the back screen at a third time point, and displays the AOD interface on the main screen at a fourth time point after the electronic device is flipped. The fourth time point is later than the third time point.**

Based on the foregoing description, the following further describes another always on display method provided in an embodiment of this application in detail. As shown in FIG. 10, the always on display method includes the following steps S1001 and S1002. The method shown in FIG. 10 may be performed by the foregoing mentioned electronic device. Alternatively, the method shown in FIG. 10 may be performed by a chip in the electronic device, which is not limited in this embodiment of this application. An example in which the method is performed by the electronic device is used in FIG. 10 for description. The electronic device includes a display. The display includes a main screen and a back screen, and the main screen and the back screen are two display areas of the same display. When the electronic device is folded, the main screen and the back screen are oriented in opposite directions. When the electronic device is unfolded, the main screen and the back screen are oriented in a same direction, and the display area is an entire display screen.

S1001: The electronic device displays AOD interface on the back screen in response to a screen-off operation at a third time point.

In this embodiment of this application, before the third time point, the electronic device is in a folded state, the back screen faces upward, and the back screen is on and displays a second interface. The third time point is any time point, and the second interface is any user interface. The user has performed the screen-off operation at the third time point. In this case, in response to the screen-off operation of the user, the electronic device can determine that the screen posture of the electronic device in this case is the folded state, and the back screen faces upward, that is, the AOD interface needs to be displayed on the back screen based on the foregoing method for displaying the AOD interface described in FIG. 6.

In a possible implementation, when the electronic device displays the AOD interface on the back screen in response to the screen-off operation of the user at the third time point, a specific implementation may be: obtaining the screen posture of the electronic device in response to the screen-off operation of the user at the third time point; and displaying the AOD interface on the back screen based on that the screen posture is the folded state and the main screen faces downward. For details, refer to descriptions in step S601, S602, and S604. Details are not described herein again.

In a possible implementation, when the electronic device displays the AOD interface on the back screen, a specific implementation may be: based on that the main screen faces down and the second interface is not displayed on the back screen, setting to display the AOD interface on the back screen. That is, before the third time point, the second interface is displayed on the back screen, and the current display area is the back screen (that is, there is non-back-screen display in the current display area). Therefore, the display area needs to be reset, that is, the AOD application displays the AOD interface, and invokes the setDisplayMode function to set the Fold Screen Manager Service to display the AOD interface on the back screen. Correspondingly, the Fold Screen Manager Service displays the AOD interface on the back screen. It may be understood that if there is non-main-screen display in the current display area, the electronic device needs to set the display mode to be back-screen display; and based on the set display mode, the AOD interface is displayed on the back screen.

S1002: The electronic device displays the AOD interface on the main screen in response to flipping the electronic device at a fourth time point, and turns off the AOD interface on the back screen.

In this embodiment of this application, in this case, the screen posture is still in the folded state, and the user flips the electronic device at the fourth time point. The fourth time point is later than the third time point. After the user flips the electronic device, the main screen faces upward, that is, the screen orientation of the electronic device changes. Because the AOD application invokes the registerDeviceListener function to monitor the Device Manager Service, when the AOD application monitors that when the screen posture changes, the electronic device may determine the screen orientation of the electronic device again, that is, the electronic device may perform step S602 in FIG. 6 again. In this case, it is determined that the main screen faces upward. Based on step S603, it may be determined that the AOD interface needs to be displayed on the main screen, and the AOD interface previously displayed on the back screen is turned off.

It may be learned that based on the method described according to this application, when the electronic device is in the folded state, it is determined that the back screen faces upward and the AOD interface is displayed on the back screen in response to the screen-off operation at the third time point; and it is determined that the main screen faces upward and the AOD interface is displayed on the main screen after the electronic device is flipped at the fourth time point. Therefore, intelligence of the always on display on the outward foldable-screen mobile phone is implemented, and convenience of the user in viewing information such as a time and a date is improved.

**III. Implementation in which the AOD interface is displayed in a scenario in which an event of exiting the displayed AOD interface due to an incoming call, a notification, an alarm clock, or the like exits occurs.**
**1. After being flipped, when the AOD interface is displayed on the back screen, the electronic device receives the event of exiting the displayed AOD interface due to an incoming call, a notification, an alarm clock, or the like.**

Based on the foregoing description, the following further describes another always on display method provided in an embodiment of this application in detail. As shown in FIG. 11, the always on display method includes the following steps S1101~S1103. The method shown in FIG. 11 may be performed by the foregoing mentioned electronic device. Alternatively, the method shown in FIG. 11 may be performed by a chip in the electronic device, which is not limited in this embodiment of this application. An example in which the method is performed by the electronic device is used in FIG. 11 for description. The electronic device includes a display. The display includes a main screen and a back screen, and the main screen and the back screen are two display areas of the same display. When the electronic device is folded, the main screen and the back screen are oriented in opposite directions. When the electronic device is unfolded, the main screen and the back screen are oriented in a same direction, and the display area is an entire display screen. In this embodiment of this application, an event of exiting the displayed AOD interface may be an incoming call event, a notification event, an alarm clock event, or the like. The following uses an example in which the event of exiting the displayed AOD interface is an incoming call event for description.

S1101: The electronic device displays the AOD interface on the main screen in response to a screen-off operation at a first time point.

S1102: The electronic device displays the AOD interface on the back screen in response to flipping the electronic device at a second time point, and turns off the AOD interface on the main screen.

For a specific implementation of steps S1101 and S1102, refer to the foregoing steps S901 and S902.

S1103: The electronic device displays an incoming call interface on the main screen in response to an incoming call event, and does not display the AOD interface on the back screen.

In a specific implementation, in this case, the electronic device displays the AOD interface on the back screen. When the incoming call event is received, a Power Manager Service notifies, by using a callback function onDreamingStopped, an AOD application to exit the displayed AOD interface in response to the incoming call event. The AOD application exits the displayed AOD interface on the back screen (that is, the AOD application does not display or turn off the AOD interface on the back screen). Because the display area is on the back screen in this case, the AOD application further needs to invoke a setDisplayMode function to set a Fold Screen Manager Service function to display the incoming call interface on the main screen. Correspondingly, the Fold Screen Manager Service displays the incoming call interface on the main screen. Based on this manner, the large display area of the main screen may be used to present more finer interfaces to the user.

In addition, the event of exiting the displayed AOD interface may be arriving a time point of exiting the AOD interface, and the back screen exits the displayed AOD interface (that is, the AOD interface is not displayed or turned off on the back screen).

For example, it is assumed that the mode of displaying the AOD interface is touch display. That is, after the user touches the screen, the AOD interface is automatically exited after the AOD interface has been displayed for 5 seconds (the 5 seconds herein is only an example, and may be another preset value). In this case, the electronic device displays the AOD interface on the back screen and turns off the AOD interface on the main screen. When an end time point of 5 seconds for displaying the AOD interface on the back screen arrives, the AOD interface is turned off on the back screen. If the electronic device is flipped within 5 seconds, re-timing may be performed or may not be performed. For example, it is assumed that the electronic device is flipped at the 2nd second within 5 seconds during which the AOD interface has been displayed. If the electronic device performs re-timing for 5 seconds, when an end time point (that is, an end time point of the 7th second) of the re-timed 5 seconds arrives, the AOD interface is turned off on the back screen; and if the electronic device does not perform re-timing for 5 seconds, when an end time point (that is, the end time point of the 5th second) of 3 seconds for continuing timing arrives, the AOD interface is turned off on the back screen. Based on this manner, power consumption of the electronic device can be reduced, and intelligence of always on display on the outward foldable-screen mobile phone is implemented.

**2. When the electronic device is not flipped and the AOD interface is displayed on the back screen, the electronic device receives the event of exiting the displayed AOD interface due to an incoming call, a notification, an alarm clock, or the like.**

Based on the foregoing description, the following further describes another always on display method provided in an embodiment of this application in detail. As shown in FIG. 12, the always on display method includes the following steps S1201 and S1202. The method shown in FIG. 12 may be performed by the foregoing mentioned electronic device. Alternatively, the method shown in FIG. 12 may be performed by a chip in the electronic device, which is not limited in this embodiment of this application. An example in which the method is performed by the electronic device is used in FIG. 12 for description. The electronic device includes a display. The display includes a main screen and a back screen, and the main screen and the back screen are two display areas of the same display. When the electronic device is folded, the main screen and the back screen are oriented in opposite directions. When the electronic device is unfolded, the main screen and the back screen are oriented in a same direction, and the display area is an entire display screen. In this embodiment of this application, an event of exiting the displayed AOD interface may be an incoming call event, a notification event, an alarm clock event, or the like. The following uses an example in which the event of exiting the displayed AOD interface is an incoming call event for description.

S1201: The electronic device displays the AOD interface on the back screen in response to a screen-off operation at the third time point.

S1202: The electronic device displays an incoming call interface on the main screen in response to the incoming call event, and does not display the AOD interface on the back screen.

For a specific implementation of step S1201, refer to the foregoing specific implementation of step S1001, which is not limited herein. For a specific implementation of step S1202, refer to the foregoing specific implementation of step S1103, which is not limited herein. Based on this manner, the large display area of the main screen may be used to present more finer interfaces to the user.

According to an always on display apparatus in an embodiment of this application, the always on display apparatus may be an electronic device, or may be an apparatus in an electronic device, or an apparatus capable of being cooperatively used with an electronic device. The electronic device includes a display. The display includes a main screen and a back screen, and the main screen and the back screen are two display areas of the same display. When the electronic device is folded, the main screen and the back screen are oriented in opposite directions. When the electronic device is unfolded, the main screen and the back screen are oriented in a same direction, and the display area is an entire display screen. The always on display apparatus may include a processing unit and a display unit, where
the processing unit is configured to respond to a screen-off operation at a first time point; and the display unit is configured to display an AOD interface on the main screen; where before the first time point, the electronic device is in the folded state, the main screen faces upward, and the main screen is on and displays a first interface; and
the processing unit is configured to respond to flipping the electronic device at a second time point; the display unit is configured to display the AOD interface on the back screen, and turn off the AOD interface on the main screen; where after the electronic device is flipped, the main screen faces downward; and the second time point is later than the first time point.

In a possible implementation, when the processing unit responds to the screen-off operation at the first time point and the display unit displays the AOD interface on the main screen, the processing unit is specifically configured to: obtain a screen posture of the electronic device in response to the screen-off operation at the first time point, and the display unit is configured to display the AOD interface on the main screen based on that the screen posture is the folded state and the main screen faces upward.

In a possible implementation, when obtaining the screen posture of the electronic device, the processing unit is specifically configured to obtain first information, where the first information includes an angle between the main screen and the back screen, and/or whether the electronic device is in the folded state; and determine the screen posture of the electronic device based on the first information.

In a possible implementation, the display unit is further configured to display the AOD interface on the display based on that the screen posture is the unfolded state.

In a possible implementation, when the AOD interface is displayed on the main screen, the display unit is specifically configured to: set a display mode to be main-screen display; and display the AOD interface on the main screen based on the set display mode.

In a possible implementation, after displaying the AOD interface on the back screen in response to flipping the electronic device at the second time point, and turning off the AOD interface on the main screen, the display unit is further configured to display an incoming call interface on the main screen in response to an incoming call event, and not display or turn off the AOD interface on the back screen.

In a possible implementation, after displaying the AOD interface on the back screen in response to flipping the electronic device at the second time point, and turning off the AOD interface on the main screen, the display unit is further configured to display a notification interface on the main screen in response to a notification event, and not display or turn off display of the AOD interface on the back screen.

In a possible implementation, after displaying the AOD interface on the back screen in response to flipping the electronic device at the second time point, and turning off the AOD interface on the main screen, the display unit is further configured to display an alarm clock interface on the main screen in response to an alarm clock event, and not display or turn off display of the AOD interface on the back screen.

In a possible implementation, the processing unit is further configured to respond to the screen-off operation at a third time point; and the display unit is further configured to display the AOD interface on the back screen, where before the third time point, the electronic device is in the folded state, the main screen faces downward, and the back screen is on and displays a second interface. The processing unit is further configured to respond to flipping the electronic device at a fourth time point; and the display unit is further configured to display the AOD interface on the main screen and turn off the AOD interface on the back screen, where after flipping the electronic device, the main screen faces upward; and the fourth time point is later than the third time point.

In a possible implementation, when the AOD interface is displayed on the back screen, the display unit is specifically configured to: set the display mode to be back-screen display; and display the AOD interface on the back screen based on the set display mode.

In a possible implementation, the processing unit is further configured to obtain a vertical acceleration when the electronic device is in a standstill state; and determine that the main screen faces upward if a direction of the vertical acceleration is downward; or determine that the main screen faces downward if a direction of the vertical acceleration is upward.

This application further provides a chip. The chip includes a processor and an interface, and the processor and the interface are coupled. The interface is configured to receive or output a signal, and the processor is configured to execute code instructions to implement a function of any one of the foregoing method embodiments.

This application further provides a computer-readable storage medium. The computer-readable storage medium stores a computer program. The computer program includes program instructions. When the program instructions are run on an always on display apparatus, a function of any one of the foregoing method embodiments is implemented.

This application further provides a computer program product. When the computer program product runs on a computer, the computer is enabled to implement a function of any one of the foregoing method embodiments.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer instructions are loaded and executed on a computer, all or some of procedures or functions according to the embodiments of this application are produced. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state disk, SSD)) or the like.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. An always on display method, applied to an electronic device, wherein the electronic device comprises a display, the display comprises a main screen and a back screen, and the main screen and the back screen are two display areas of the same display; when the electronic device is folded, the main screen and the back screen are oriented in opposite directions; when the electronic device is unfolded, the main screen and the back screen are oriented in a same direction, and the display area is an entire display screen; and the method comprises:
displaying an AOD interface on the main screen in response to a screen-off operation at a first time point; wherein before the first time point, the electronic device is in a folded state, the main screen faces upward, and the main screen is on and displays a first interface; and
displaying the AOD interface on the back screen in response to flipping the electronic device at a second time point, and turning off the AOD interface on the main screen; wherein after the electronic device is flipped, the main screen faces downward; and the second time point is later than the first time point.

2. The method according to claim 1, wherein the displaying an AOD interface on the main screen in response to a screen-off operation at a first time point comprises:
obtaining a screen posture of the electronic device in response to the screen-off operation at the first time point; and
displaying the AOD interface on the main screen based on that the screen posture is the folded state and the main screen faces upward.

3. The method according to claim 2, wherein the obtaining a screen posture of the electronic device comprises:
obtaining first information, wherein the first information comprises an angle between the main screen and the back screen, and/or whether the electronic device is in the folded state; and
determining the screen posture of the electronic device based on the first information.

4. The method according to claim 2 or 3, wherein the method further comprises:
displaying the AOD interface on the display based on that the screen posture is an unfolded state.

5. The method according to any one of claims 1-4, wherein the displaying the AOD interface on the main screen comprises:
setting a display mode to be main-screen display; and
displaying the AOD interface on the main screen based on the set display mode.

6. The method according to any one of claims 1-5, wherein after the displaying the AOD interface on the back screen in response to flipping the electronic device at a second time point, and turning off the AOD interface on the main screen, the method further comprises:
displaying an incoming call interface on the main screen in response to an incoming call event, and not displaying the AOD interface on the back screen.

7. The method according to any one of claims 1-6, wherein the method further comprises:
displaying the AOD interface on the back screen in response to the screen-off operation at a third time point; wherein before the third time point, the electronic device is in the folded state, the main screen faces downward, and the back screen is on and displays a second interface; and
displaying the AOD interface on the main screen in response to flipping the electronic device at a fourth time point, and turning off the AOD interface on the back screen; wherein after the electronic device is flipped, the main screen faces upward; and the fourth time point is later than the third time point.

8. The method according to claim 7, wherein the displaying the AOD interface on the back screen comprises:
setting the display mode to be back-screen display; and
displaying the AOD interface on the back screen based on the set display mode.

9. The method according to any one of claims 1-8, wherein the method further comprises:
obtaining a vertical acceleration when the electronic device is in a standstill state; and
determining that the main screen faces upward if a direction of the vertical acceleration is downward; or
determining that the main screen faces downward if a direction of the vertical acceleration is upward.

10. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1-9.

11. A computer-readable storage medium, wherein the computer-readable storage medium stores a computer program, the computer program comprises program instructions, and when the program instructions are run on an electronic device, the electronic device is enabled to perform the method according to any one of claims 1-9.
